# FASCICULE DE BREVET EUROPEEN

(11) **EP 3 278 139 B1**
(45) Date de publication et mention de la délivrance du brevet: **12.02.2020**
(21) Numéro de dépôt: 16717986.0
(22) Date de dépôt: 25.03.2016
(51) Int. Cl.: G01S 13/88, H01Q 3/20, G01S 7/40, G01S 7/03, G01S 13/42, G01S 13/89, H01Q 19/06

(54) **DISPOSITIF D'IMAGERIE ET PROCÉDÉ D'IMAGERIE CORRESPONDANT**
ABBILDUNGSVORRICHTUNG UND ENTSPRECHENDES ABBILDUNGSVERFAHREN
IMAGING DEVICE AND CORRESPONDING IMAGING METHOD

(30) Priorité: 02.04.2015 FR 1552860
(43) Date de publication de la demande: 07.02.2018
(73) Titulaire: Microwave Characterization Center, 59262 Sainghin en Melantois (FR)
(72) Inventeur: CLEMENCE, Florent, 59650 Villeneuve D'ascq (FR); THOUVENIN, Nicolas, 59155 Faches Thumesnil (FR); WERQUIN, Matthieu, 59810 Lesquin (FR); JONNIAU, Sylvain, 59170 Croix (FR); VELLAS, Nicolas, 62136 Richebourg (FR)
(74) Mandataire: Cabinet Beau de Loménie
(86) Numéro de dépôt international: PCT/FR2016/050682
(87) Numéro de publication internationale: WO 2016/156717

(56) Documents cités:
- US-A1- 2002 044 276
- US-A1- 2003 164 790
- US-A1- 2004 149 907
- US-A1- 2010 104 193
- US-A1- 2012 085 909
- US-A1- 2013 093 611
- US-B1- 6 396 448

## Description

### Arrière-plan de l'invention

La présente invention concerne un dispositif d'imagerie, et un procédé d'imagerie correspondant. La présente invention concerne notamment l'imagerie hyperfréquence, et en particulier l'imagerie radiométrique.

L'invention a notamment pour but de permettre la détection automatique d'objets cachés, notamment par des personnes, de manière fiable, rapide et aisée. Une telle détection peut notamment être utilisée dans les zones de contrôle d'aéroports, de sites militaires ou bien encore de sites sensibles pouvant nécessiter une fouille, par exemple les prisons, les centrales nucléaires, etc.

Les exigences de sécurité ont été accrues avec l'augmentation des risques, notamment d'attentat. Un certain nombre de systèmes de détection ont ainsi été développés ou sont en cours de développement pour répondre à ces exigences. Il existe notamment des systèmes actifs, par exemple des portiques d'aéroport, utilisent la radiométrie afin de détecter n'importe quels objets (métalliques ou non) portés par des passagers, notamment sous les vêtements, avec une résolution inférieure à 1 cm. Un des buts de tels systèmes est notamment d'obtenir une image avec une qualité élevée, par exemple avec un nombre de pixels important permettant une exploitation aisée du résultat.

Dans le domaine visible, il est actuellement classique d'utiliser des capteurs de type CCD pour effectuer une image d'une scène. De tels capteurs comprennent des matrices de plusieurs millions de photodiodes permettant d'enregistrer une image dans le visible de plusieurs millions de pixels (un pixel nécessitant généralement quatre photodiodes associées à des filtres de couleurs différentes). Il est alors possible d'enregistrer une image dans le domaine visible en enregistrant le signal reçu par chaque photodiode à l'instant de la prise de vue. Par ailleurs, les photodiodes utilisées sont petites, de l'ordre de 1.5µm, et consomment peu d'énergie. Il est ainsi possible, avec de tels capteurs, d'enregistrer une image rapidement, avec un appareil peu encombrant et peu consommateur d'énergie.

Cependant, dans le domaine hyperfréquence, et notamment radiométrique, les capteurs existants ne permettent pas d'obtenir de telles caractéristiques. En premier lieu, pour des raisons physiques, les capteurs radiométriques ne peuvent présenter une taille inférieure à la longueur d'onde détectée, qui est de l'ordre du millimètre : les capteurs radiométriques présentent donc une taille supérieure au millimètre, ce qui implique un encombrement important lorsqu'on envisage une matrice de plusieurs milliers de capteurs. De plus, les capteurs hyperfréquences restent encore très coûteux et consommateurs d'énergie. Ainsi, pour ces différentes raisons, il n'est actuellement pas envisagé de fabriquer des dispositifs d'imagerie radiométrique semblables aux dispositifs d'imagerie dans le domaine visible, avec un nombre de capteurs égal au nombre de pixels des images fournies par le dispositif.

Pour pallier cet inconvénient, il est connu d'utiliser des dispositifs comprenant des capteurs associés à un système de balayage permettant de balayer (en anglais : « to scan ») complètement une personne en un minimum de temps et à courtes distances. De tels dispositifs permettent alors de faire des images à des distances inférieures à 1 mètre.

Cependant, de tels dispositifs nécessitent une structure relativement complexe, destinée à déplacer les capteurs le long de la scène à mesurer : cela implique des contraintes, comme rester immobile pour la personne qui est mesurée par le dispositif. De plus, de tels dispositifs nécessitent également plus de temps pour fournir une image complète de la scène, notamment en raison du déplacement des capteurs qui ne peut pas être très rapide à proximité immédiate de la personne à mesurer. Enfin, le nombre de capteurs présents peut rester important, notamment pour limiter la durée de la mesure, ce qui conduit à un dispositif cher et grand consommateur d'énergie.

Le document US 2012/085909 décrit un appareil d'inspection à ondes millimétriques. L'appareil d'inspection à ondes millimétriques comprend: des dispositifs optiques, configurés pour recevoir de l'énergie à ondes millimétriques rayonnée par un objet à inspecter et à focaliser l'énergie à ondes millimétriques reçue; un dispositif de réception de radiomètre configuré pour recevoir l'énergie des ondes millimétriques focalisée et transformer l'énergie des ondes millimétriques en un signal électrique; et un dispositif d'imagerie configuré pour générer une image de température de l'objet à inspecter sur la base du signal électrique.

### Objet et résumé de l'invention

La présente invention vise à résoudre les différents problèmes techniques énoncés précédemment. En particulier, la présente invention vise à proposer un dispositif d'imagerie hyperfréquence permettant d'effectuer un balayage rapide d'une scène donnée, c'est-à-dire de fournir rapidement une image avec un nombre de pixels élevé, tout en ayant un nombre limité de capteurs hyperfréquences. La présente invention vise en outre à proposer un dispositif d'imagerie dans lequel un calibrage des capteurs hyperfréquences est réalisé de manière précise et périodique.

Préférentiellement, la présente invention vise à proposer un dispositif permettant de balayer une ou plusieurs scènes rapidement, et d'en fournir des images fiables et précises.

Ainsi, selon un aspect, il est proposé un dispositif d'imagerie comprenant :
- un premier capteur ou ensemble de capteurs hyperfréquences, de préférence radiométriques, chaque capteur hyperfréquence étant configuré pour capter des rayonnements électromagnétiques émis ou réfléchis par des corps ou objets situés dans une zone de détection dudit capteur hyperfréquence, et
- un moyen réfléchissant configuré pour réfléchir les rayonnements électromagnétiques pouvant être captés par le premier capteur ou ensemble de capteurs hyperfréquences.

En particulier, le moyen réfléchissant est monté mobile dans la zone de détection de chaque capteur hyperfréquence, de manière à déplacer ladite zone de détection par déplacement du moyen réfléchissant.

Le dispositif d'imagerie comprend également plusieurs moyens émissifs de référence, de préférence deux, et le moyen réfléchissant est configuré pour également déplacer la zone de détection de chaque capteur hyperfréquence sur chacun des moyens émissifs de référence. Afin de calibrer les capteurs, des références connues sont positionnées dans la zone de balayage du moyen réfléchissant. Ainsi, lors du balayage de la scène à mesurer, les capteurs balayent également les deux références, ce qui permet de régler chaque capteur, par exemple le gain et le facteur de bruit, à chaque balayage.

Ainsi, le moyen réfléchissant permet d'orienter librement la zone de détection des capteurs, afin de mesurer une autre partie de la scène à mesurer. On effectue alors un balayage de la scène à mesurer (objets ou personnes) par déplacement du moyen réfléchissant, ce qui limite d'une part le nombre de capteurs hyperfréquences, et d'autre part la structure du balayage (seul le moyen réfléchissant est déplacé, et non les capteurs).

On entend par capteur hyperfréquence, et en particulier par capteur radiométrique, un capteur capable de mesurer des fréquences électromagnétiques comprises entre 10⁷ Hz et 10¹⁴ Hz, de préférence entre 10⁹ Hz et 10¹³ Hz.

Préférentiellement, le ou les capteurs hyperfréquences sont des capteurs radiométriques.

Préférentiellement, le dispositif d'imagerie comprend également un moyen de focalisation, monté dans la zone de détection de chaque capteur hyperfréquence et permettant de focaliser sur chaque capteur hyperfréquence les rayonnements électromagnétiques issus d'une zone de mesure, et le moyen réfléchissant est positionné entre le moyen de focalisation et la zone de mesure de chaque capteur hyperfréquence.

Ainsi, le moyen réfléchissant permet de balayer la scène à mesurer avec la zone de détection du ou des capteurs hyperfréquences. Chaque capteur hyperfréquence mesure alors plusieurs points de la scène à mesurer (conduisant à plusieurs pixels), ce qui permet d'obtenir un nombre de pixels sur l'image hyperfréquence supérieur au nombre de capteurs du dispositif d'imagerie.

Préférentiellement, le moyen réfléchissant est monté mobile en rotation à 360° autour d'un premier axe.

Préférentiellement, le dispositif comprend un moyen de rotation configuré pour faire tourner le moyen réfléchissant à une vitesse de rotation supérieure ou égale à 300 tours par minute, de préférence supérieure ou égale à 450 tours par minute, et plus préférentiellement supérieure ou égale à 600 tours par minute.

Préférentiellement, le moyen réfléchissant est monté mobile en rotation autour d'un deuxième axe, par exemple perpendiculaire au premier axe. Les différents degrés de liberté du moyen réfléchissant permettent de faire balayer, à la zone de détection de chaque capteur, une plus grande surface de la scène à mesurer. On peut ainsi réduire encore le nombre de capteurs, ou bien augmenter la surface de la scène mesurée.

Préférentiellement, le dispositif d'imagerie comprend un premier ensemble de capteurs hyperfréquences disposés en ligne, de manière à ce que les zones de mesure correspondant audit premier ensemble de capteurs hyperfréquences soient alignées, de préférence parallèlement au premier axe de rotation du moyen réfléchissant, afin d'être déplacées par rotation du moyen réfléchissant autour du premier axe. Dans ce mode de réalisation, le moyen réfléchissant permet de balayer la scène à mesurer avec une ligne de zones de détection : lorsque la ligne mesure la largeur de la scène à mesurer, il ne suffit plus qu'au moyen réfléchissant de déplacer cette ligne sur toute la hauteur de la scène à mesurer pour en obtenir une image complète.

Préférentiellement, le moyen réfléchissant présente une surface supérieure ou égale à 0,1m², de préférence supérieure ou égale à 0,3m², et plus préférentiellement supérieure ou égale à 0,4m².

Préférentiellement, le moyen réfléchissant est monté dans un cylindre transparent aux rayonnements électromagnétiques pouvant être captés par le ou les capteurs hyperfréquences. L'utilisation d'un moyen réfléchissant, par exemple un miroir, monté dans un cylindre transparent aux rayonnements, permet de déplacer, et plus particulièrement de faire tourner sur lui-même, le moyen réfléchissant à grande vitesse tout en limitant les perturbations, notamment les mouvements d'air, les bruits sonores et les vibrations dû à la rotation. On obtient alors un dispositif plus stable et fiable, tout en présentant une vitesse de balayage élevée, par exemple 450 tours par minute.

Préférentiellement, l'axe du cylindre est monté selon le premier axe.

Préférentiellement, le moyen réfléchissant est plan et le premier axe s'étend dans le plan du moyen réfléchissant.

Préférentiellement, les moyens émissifs sont fixes. Plus précisément, les moyens émissifs peuvent être fixes par rapport au premier capteur ou à l'ensemble de capteurs hyperfréquences. On n'a donc que le moyen réfléchissant qui est mobile par rapport au premier capteur ou à l'ensemble de capteurs.

Préférentiellement, le moyen réfléchissant comporte un plan avec deux faces réfléchissantes. Selon ce mode de réalisation, une rotation complète du moyen réfléchissant autour de son axe permet de balayer deux fois la scène à mesurer : une fois par face réfléchissante. Pour une même vitesse de rotation du moyen réfléchissant, on double donc le nombre de mesures effectuées par chaque capteur, qui peuvent ensuite être moyennées pour améliorer le rapport signal sur bruit de l'image finale.

Préférentiellement, le dispositif d'imagerie comprend un deuxième capteur ou ensemble de capteurs hyperfréquences, de préférence radiométriques, monté en regard du premier capteur ou ensemble de capteurs hyperfréquences. Le moyen réfléchissant est monté entre le premier capteur ou ensemble de capteurs hyperfréquences, et le deuxième capteur ou ensemble de capteurs hyperfréquences, et mobile dans la zone de détection de chaque capteur hyperfréquence, de manière à déplacer ladite zone de détection par déplacement du moyen réfléchissant.

Le deuxième capteur ou ensemble de capteurs permet d'effectuer une deuxième série de mesures, en utilisant le même moyen réfléchissant que le premier capteur ou ensemble de capteurs, et sans diminuer la zone de balayage du premier capteur ou ensemble de capteurs. On peut donc doubler le nombre de mesures effectuées sur une même scène, et par conséquent améliorer le rapport signal sur bruit de l'image finale.

Selon un autre aspect, il est également proposé un procédé d'imagerie hyperfréquence, de préférence radiométrique, comprenant :
- un premier capteur ou ensemble de capteurs hyperfréquences, de préférence radiométriques, chaque capteur hyperfréquence étant configuré pour capter des rayonnements électromagnétiques émis ou réfléchis par des corps ou objets situés dans une zone de détection dudit capteur hyperfréquence, et
- un moyen réfléchissant configuré pour réfléchir les rayonnements électromagnétiques pouvant être captés par le premier capteur ou ensemble de capteurs hyperfréquences, et monté mobile dans la zone de détection de chaque capteur hyperfréquence
dans lequel on déplace le moyen réfléchissant de manière à déplacer ladite zone de détection sans déplacer le premier capteur ou ensemble de capteurs hyperfréquences. On déplace la zone de détection de chaque capteur hyperfréquence successivement sur un corps ou objets et sur plusieurs moyens émissifs de référence, de préférence deux.

Préférentiellement, le moyen réfléchissant est monté mobile en rotation à 360° autour d'un premier axe, et on fait tourner le moyen réfléchissant à 360° autour du premier axe pour déplacer ladite zone de détection.

Préférentiellement, le moyen réfléchissant est monté dans un cylindre transparent aux rayonnements électromagnétiques pouvant être captés par le ou les capteurs hyperfréquences, et on fait tourner le cylindre transparent autour de son axe pour déplacer ladite zone de détection.

L'axe du cylindre peut être monté selon le premier axe.

Préférentiellement, le moyen réfléchissant est plan, et le premier axe s'étend dans le plan du moyen réfléchissant.

### Brève description des dessins

L'invention et ses avantages seront mieux compris à la lecture de la description détaillée de quatre modes de réalisation particuliers, pris à titre d'exemples nullement limitatifs et illustrés par les dessins annexés sur lesquels :
- la figure **1** est une vue de côté d'un premier mode de réalisation d'un dispositif non-couvert par l'invention,
- la figure **2** est une vue de face du premier mode de réalisation,
- la figure **3** est une vue en perspective d'un élément réfléchissant équipant les dispositifs selon l'invention,
- la figure **4** est une vue de côté d'un deuxième mode de réalisation d'un dispositif selon l'invention,
- la figure **5** est une vue de côté d'un troisième mode de réalisation d'un dispositif selon l'invention, et
- la figure **6** est une vue de côté d'un quatrième mode de réalisation d'un dispositif selon l'invention.

### Description détaillée de l'invention

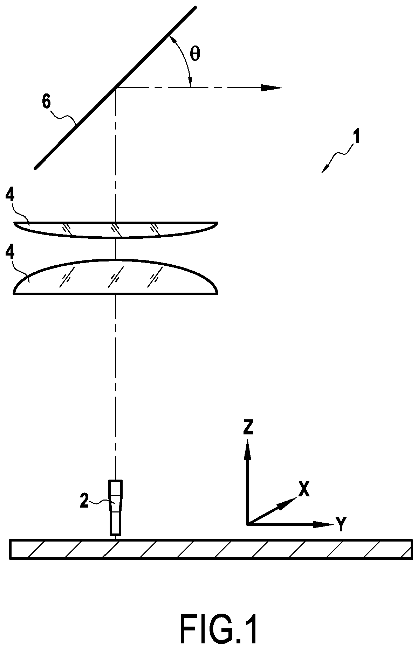

La figure **1** illustre, de manière schématique, une vue de côté d'un premier mode de réalisation d'un dispositif d'imagerie **1** non-couvert par l'invention.

Dans ce premier mode de réalisation, le dispositif d'imagerie **1** comprend un ensemble de capteurs hyperfréquences **2** ayant chacun une zone de détection, un moyen de focalisation **4** permettant de focaliser la zone de détection de chaque capteur hyperfréquence **2**, et un moyen réfléchissant **6**.

Le capteur hyperfréquence **2** est configuré pour capter les rayonnements émis ou réfléchis par des corps ou objets dans sa zone de détection. Le capteur hyperfréquence **2** peut être un capteur actif ou passif. De préférence, le capteur hyperfréquence **2** est un capteur radiométrique, tel qu'un capteur passif radiométrique mesurant un signal de bruit gaussien correspondant au rayonnement émis par les corps dont la température est différente de zéro degré kelvin.

Alternativement, le capteur hyperfréquence **2** peut être un capteur actif dans lequel un signal est émis en direction du corps, par exemple un signal de bruit, afin d'augmenter la sensibilité et/ou la précision de la mesure effectuée par le capteur hyperfréquence **2.** Alternativement, le capteur hyperfréquence **2** peut être un capteur actif dans lequel un signal périodique connu est émis en direction du corps et dans lequel le capteur hyperfréquence détermine les différences d'amplitude et de phase du signal mesuré par rapport au signal émis.

Dans l'exemple décrit ci-après, nous considérons que le capteur hyperfréquence **2** est un capteur radiométrique ou radiomètre. Le capteur hyperfréquence **2** comprend notamment une antenne (non représentée) pour capter les rayonnements de la zone de détection, et un récepteur (non représenté) traitant les rayonnements captés par l'antenne et délivrant un signal représentatif desdits rayonnements.

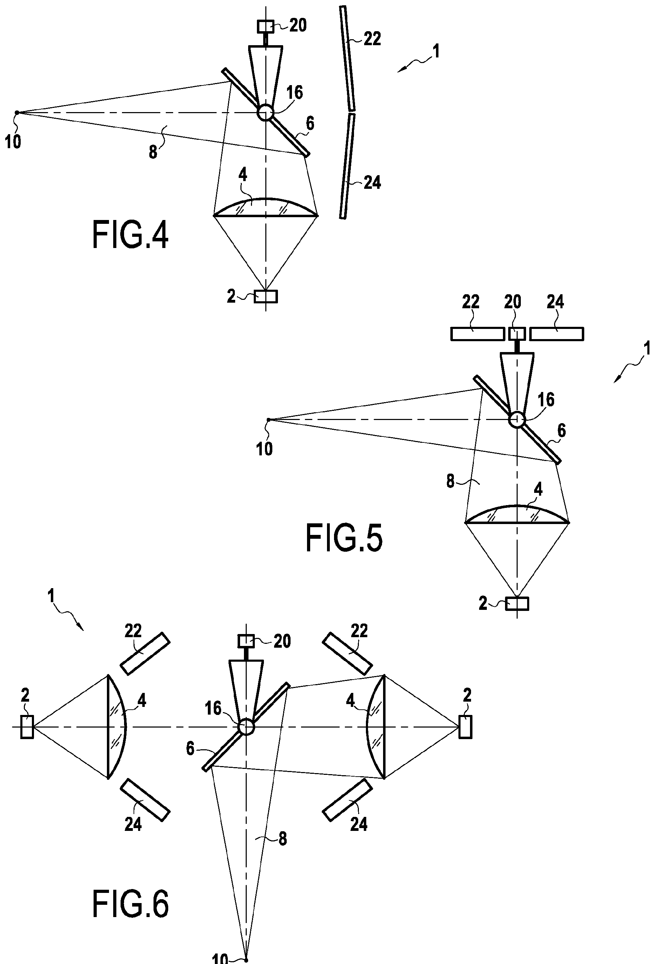

A l'ensemble des capteurs hyperfréquences **2** est associé un moyen de focalisation **4**. Comme illustré sur les figures **4** à **6**, le moyen de focalisation **4** est un système optique montée dans la zone de détection **8** de chaque capteur hyperfréquence **2**, qui permet de focaliser les rayonnements issus d'une zone précise, dite zone de mesure **10**, vers le capteur hyperfréquence **2** correspondant. Le moyen de focalisation **4** peut notamment comprendre une ou plusieurs lentilles, par exemple convergentes, afin de minimiser les distorsions et améliorer la détection optique du dispositif d'imagerie **1.**

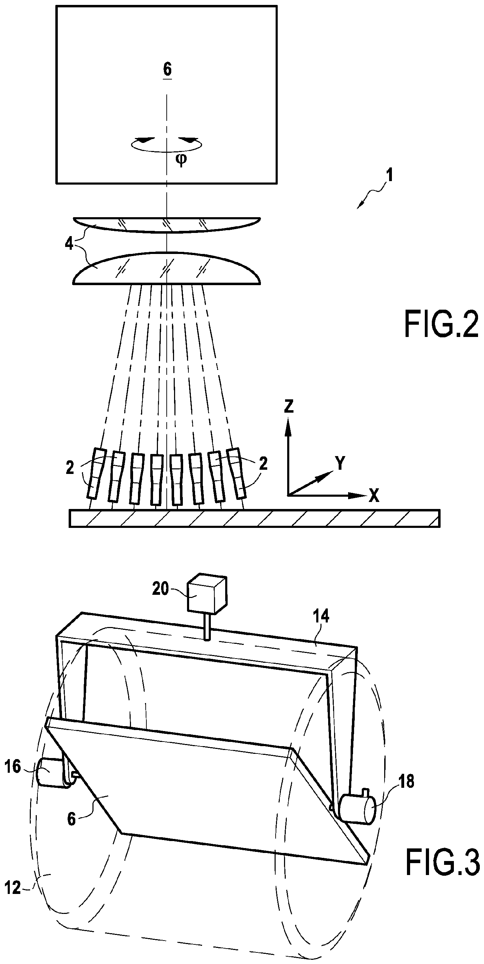

Dans le cas du dispositif d'imagerie **1** représenté sur les figures **1** et **2**, les capteurs hyperfréquences **2** sont montés en ligne, selon un axe (axe x des figures **1** et **2**), pour former, via le moyen de focalisation **4**, une ligne de mesure constituée par l'alignement des zones de mesure **10** des différents capteurs **2.** Plus précisément, les capteurs hyperfréquences **2** sont alignés dans un même plan, et positionnés selon un arc de cercle dont le centre est placé sur l'axe optique du moyen de focalisation **4.** Une telle configuration permet d'obtenir les zones de mesure **10** des différents capteurs **2** dans un même plan, dit plan de focalisation, correspondant au plan de la scène à mesurer. Par ailleurs, chaque capteur **2** peut également être orienté de manière spécifique, par rotation autour de l'axe y, afin d'obtenir une focalisation adéquate pour chaque capteur **2**, quelle que soit l'orientation pouvant être prise par le moyen réfléchissant **6.**

Le moyen réfléchissant **6** est un élément permettant de réfléchir, avec un taux de réflexion élevé, les rayonnements détectés par les capteurs hyperfréquences **2**, par exemple un miroir. Afin de permettre le balayage de la scène à mesurer par les zones de mesure **10** des différents capteurs hyperfréquences **2**, le moyen réfléchissant **6** est monté dans la zone de détection **8** des différents capteurs hyperfréquences **2**, et pivotant selon un ou plusieurs degrés de liberté, selon la surface de la scène à balayer.

Dans le cas présent, le moyen réfléchissant **6** est plan. Par ailleurs, le moyen réfléchissant **6** est monté mobile en rotation autour d'un axe s'étendant selon la direction x, c'est-à-dire parallèle à l'alignement des capteurs **2.** Par ailleurs, l'axe de rotation du moyen réfléchissant **6** sépare celui-ci en deux parties sensiblement égales. L'angle entre le moyen réfléchissant **6** à un instant donné t et une position de référence du moyen réfléchissant **6** est désigné par θ(t).

La rotation du moyen réfléchissant **6** autour de l'axe x permet de déplacer la ligne de mesure des capteurs hyperfréquences **2** selon une direction perpendiculaire à ladite ligne. Ainsi, en considérant l'axe z comme étant vertical, et les axes x et y comme étant horizontaux, la ligne de mesure formée par l'alignement des zones de mesure **10** des capteurs **2** s'étend selon l'axe x, et la rotation du moyen réfléchissant **6** autour de l'axe x permet de déplacer ladite ligne de mesure verticalement, c'est-à-dire selon la direction z. Il est ainsi possible, lorsque la longueur de la ligne de mesure correspond à la largeur de la scène à mesurer, de balayer l'ensemble de la scène à mesurer en faisant tourner le moyen réfléchissant **6** de manière à déplacer la ligne de mesure depuis son extrémité inférieure jusqu'à son extrémité supérieure : on obtient facilement et rapidement un balayage « de haut en bas » de la scène, par rotation du moyen réfléchissant **6.**

Le moyen réfléchissant **6** peut ainsi tourner à 360° en continu, de manière à balayer la scène à mesurer. Par ailleurs, dans le cas d'un moyen réfléchissant **6** présentant deux faces réfléchissantes (par exemple un double miroir), on obtient un balayage de la scène deux fois par rotation de 360° du moyen réfléchissant **6.** Or, un balayage multiple de la scène permet d'obtenir plusieurs mesures pour chaque point de celle-ci, qui peuvent être moyennées pour améliorer le rapport signal sur bruit : ainsi, N balayages permettent d'améliorer la sensibilité de N^{1/2}.

Par ailleurs, et comme représenté à la figure **2**, le moyen réfléchissant **6** peut également être monté mobile en rotation par rapport à un deuxième axe, de préférence perpendiculaire au premier. Ainsi, le moyen réfléchissant **6** du dispositif d'imagerie **1** est mobile en rotation autour d'un axe (s'étendant selon la direction z) passant par le centre géométrique du moyen réfléchissant **6.** L'angle entre le moyen réfléchissant **6** à un instant donné t et une position de référence est désigné par ϕ(t).

La rotation du moyen réfléchissant **6** autour de l'axe z permet de déplacer la ligne de mesure des capteurs hyperfréquences **2** dans la direction de ladite ligne. Ainsi, en considérant l'axe z comme étant vertical, et les axes x et y comme étant horizontaux, la ligne de mesure formée par l'alignement des zones de mesure **10** des capteurs **2** s'étend selon l'axe x, et la rotation du moyen réfléchissant **6** autour de l'axe z permet de déplacer ladite ligne de mesure selon l'axe x. Il est ainsi possible de balayer une scène plus large que la longueur de la ligne de mesure, on effectuant un balayage vertical (rotation autour de l'axe x) pour différentes valeurs de ϕ, ou, alternativement, d'effectuer un balayage horizontal pour différentes valeurs de θ. On peut ainsi balayer en intégralité une scène plus large que la ligne de mesure.

Alternativement, la ligne de mesure peut être formée par l'alignement discontinu des zones de mesure **10** des différents capteurs. Dans ce cas, la rotation du moyen réfléchissant **6** autour de l'axe z peut permettre de mesurer les portions de scène situées entre les zones de mesure **10** de la ligne de mesure. Plus particulièrement, en déplaçant le moyen réfléchissant autour de l'axe z de manière à mesurer les espaces de la scène situés entre deux zones de mesure **10** adjacentes, il est possible de mesurer la largeur de la scène sans redondance entre les différentes mesures effectuées par les différents capteurs **2.**

Toutefois, le dispositif d'imagerie **1** selon l'invention n'est pas limité à un tel moyen réfléchissant **6**, et on pourrait également considérer un moyen réfléchissant de forme différente, par exemple sphérique, monté mobile autour d'un axe situé à une extrémité du moyen réfléchissant par exemple.

La figure **3** illustre un exemple de moyen réfléchissant **6** selon l'invention. En particulier, le moyen réfléchissant **6**, dans le cas présent un miroir plan, est monté dans un cylindre **12** qui est transparent aux rayonnements mesurés par les capteurs **2** et dont la surface permet de limiter les pertes par réflexion et/ou transmission des rayonnements mesurés par les capteurs, afin que le cylindre **12** soit invisible pour les capteurs **2.** Le cylindre **12** peut être par exemple en un matériau présentant une constante diélectrique faible, proche de 1. Le moyen réfléchissant **2** peut par exemple être monté dans le cylindre **12** selon un plan de symétrie comportant l'axe du cylindre **12.** Préférentiellement, l'axe x de rotation du moyen réfléchissant **6** est confondu avec l'axe du cylindre **12.** Le moyen réfléchissant **6** peut présenter une forme rectangulaire, avec une largeur de 60cm et une longueur de 70cm, c'est-à-dire une superficie de 0,42m². Une telle superficie, lorsqu'elle est mise en rotation sur elle-même, provoque des mouvements d'air importants autour d'elle, nécessitant un moteur plus puissant, une correction des mesures effectuées par les capteurs ainsi qu'un bruit sonore très important : l'utilisation d'un cylindre autour du moyen réfléchissant plan permet de limiter de tels mouvements d'air.

A titre d'exemple, le cylindre **12** peut être plein, en matériau diélectrique tel que du polyéthylène expansé présentant une constante diélectrique εᵣ égale à 1,05. Alternativement, le cylindre **12** peut être vide et formé par un film plastique maintenu par des arceaux entourant le moyen réfléchissant **2** et conférant la forme cylindrique.

Par ailleurs, le cylindre **12** est monté sur un châssis **14**, et est maintenu au châssis **14** selon son axe qui est monté mobile en rotation. Le châssis **14** comprend également un moteur d'entraînement **16**, par exemple un moteur continu permettant de faire tourner le cylindre **12** (et donc le moyen réfléchissant **6**) à une vitesse élevée et constante, ainsi qu'une roue codée **18** permettant de connaître à chaque instant l'angle θ du moyen réfléchissant **6** par rapport à la position de référence.

Avec une telle configuration, il devient possible de faire tourner rapidement le moyen réfléchissant **6**, tout en limitant les bruits dus aux mouvements de l'air et les vibrations : le moyen réfléchissant **6** monté dans le cylindre **12** se comporte, d'un point de vue hyperfréquence, comme un moyen réfléchissant en rotation, mais forme un ensemble homogène et équilibré améliorant la vitesse et la qualité des mesures effectuées par les capteurs **2**, notamment la résolution spatiale et la sensibilité. On peut notamment effectuer un balayage vertical très rapidement, voire effectuer plusieurs balayages verticaux de la même scène plusieurs fois successivement, afin de moyenner les valeurs obtenues et obtenir un meilleur signal sur bruit pour l'image finale. A titre d'exemple, le moteur **16** peut effectuer 450 tours par minutes (soit 7,5 tours par seconde).

Le châssis **14** peut également être monté en rotation, par exemple par rapport à l'axe z, via un moteur **20.** Le moteur **20**, par exemple un moteur pas à pas, permet d'orienter le moyen réfléchissant **6** en déterminant l'angle ϕ entre celui-ci et une position de référence. Le moteur **20** n'a pas besoin d'être continu, mais est choisi au contraire pas à pas, de manière à permettre le balayage vertical de la scène pour chaque angle ϕ.

La figure **4** représente un deuxième mode de réalisation de l'invention dans lequel les références identiques à la figure **1** désignent les mêmes éléments. La figure **4** représente un dispositif d'imagerie **1** comprenant également des moyens émissifs de référence **22**, **24.**

En effet, un des principaux problèmes des capteurs hyperfréquences concerne leur stabilité dans le temps en termes de gain et/ou facteur de bruit. Ces instabilités sont induites par des variations de températures et/ou par le bruit basse fréquence des circuits de polarisation. Dans le cas d'un dispositif comportant plusieurs capteurs hyperfréquences, il est donc important de pouvoir normaliser la réponse (gain et facteur de bruit) de l'ensemble des capteurs, par exemple avec des moyens émissifs de référence. En particulier, la correction du gain et du facteur de bruit nécessite l'utilisation de deux références.

Ainsi, les moyens émissifs de référence **22**, **24** sont configurés pour permettre un calibrage in situ des différents capteurs **2.** Les moyens émissifs de référence **22**, **24** peuvent être formés avec des matériaux absorbants régulés à deux températures différentes. Les moyens de référence **22**, **24** peuvent également présenter une taille permettant d'être dans la zone de mesure **10** ou de détection de tous les capteurs **2** : dans ce cas, pour une position donnée du moyen réfléchissant **6**, il est possible de savoir que tous les capteurs **2** mesurent un même rayonnement, et de calibrer en conséquence les valeurs obtenues par les différents capteurs **2.**

Plus précisément, les moyens émissifs de référence **22**, **24** sont disposés dans le champ de balayage du moyen réfléchissant **6** : cela implique une réduction de la taille de la scène pouvant être balayée par le moyen réfléchissant **6**, mais permet à chaque rotation du moyen réfléchissant **6**, de balayer successivement la scène à mesurer et au moins un des moyens émissifs de référence **22**, **24.**

Dans le cas représenté à la figure **4**, les moyens émissifs de référence **22**, **24** sont disposés dans une direction opposée à celle de la scène à mesurer. A chaque demi-tour du moyen réfléchissant, les capteurs **2** mesurent une valeur de la scène à mesurer puis un (ou plusieurs) rayonnement(s) de référence permettant de normaliser les valeurs mesurées de la scène sur ledit demi-tour. Un tel dispositif d'imagerie **1** permet une calibration systématique et régulière sans nécessiter de moteur supplémentaire et sans perte de temps.

La figure **5** représente un troisième mode de réalisation de l'invention dans lequel les références identiques à la figure **1** désignent les mêmes éléments. La figure **5** représente un dispositif d'imagerie **1** dans lequel les moyens émissifs de référence **22**, **24** sont positionnés en regard des capteurs **2**, avec le moyen réfléchissant **6** positionné entre les capteurs **2** et les moyens émissifs de référence **22**, **24**. Un tel mode de réalisation permet notamment, lorsqu'il est positionné verticalement, de scanner deux scènes différentes : une scène à gauche du dispositif d'imagerie **1** et une scène à droite. Ce mode de réalisation peut notamment être positionné dans un couloir de passage de personnes, pour balayer lesdites personnes successivement de face et de dos.

La figure **6** représente un quatrième mode de réalisation de l'invention dans lequel les références identiques à la figure **1** désignent les mêmes éléments. La figure **6** représente un dispositif d'imagerie **1** comprenant un deuxième ensemble de capteurs hyperfréquences **2**, montés en regard du premier ensemble de capteurs hyperfréquences **2**, avec le moyen réfléchissant **6** positionné entre les deux ensembles, et une deuxième paire de moyens émissifs de référence **22**, **24**. Chaque paire de moyens émissifs de référence **22**, **24** est disposé dans le champ de balayage d'un des ensemble de capteurs **2.** Un tel mode de réalisation permet d'obtenir, avec un seul moyen réfléchissant **6**, deux images de la même scène mesurée par deux ensembles de capteurs **2**, tout en pouvant balayer deux scènes en même temps : une scène au-dessus et une scène en-dessous. On peut ainsi augmenter la sensibilité de l'image finale d'un facteur 2^{1/2} en moyennant les valeurs. Alternativement, le temps de réalisation d'un balayage peut être divisé par deux. Toutefois, pour chaque ensemble de capteurs **2**, on retrouve une paire de moyens émissifs de référence pour calibrer les capteurs **2** correspondants.

Ainsi, grâce au dispositif d'imagerie selon l'invention, il devient possible, de manière fiable et performante, d'effectuer des balayages de scènes rapidement et avec des mesures calibrées, à partir d'un dispositif d'imagerie présentant un nombre limité de capteurs. L'utilisation d'un cylindre permet notamment de limiter les perturbations pouvant être créées par la rotation rapide du moyen réfléchissant. Par ailleurs, l'utilisation de moyens émissifs de référence qui sont balayées systématiquement, permet un calibrage automatique et efficace des capteurs, sans retarder les mesures de la scène. Enfin, l'invention permet d'effectuer rapidement un balayage multiple d'une ou plusieurs scènes, ce qui permet, en moyennant des valeurs, d'améliorer encore la sensibilité des résultats, et donc la qualité de ceux-ci.

## Revendications

1. Dispositif d'imagerie (1) **caractérisé en ce qu'**il comprend :
- un premier ensemble de capteurs hyperfréquences (2), de préférence radiométriques, chaque capteur hyperfréquence (2) étant configuré pour capter des rayonnements électromagnétiques émis ou réfléchis par des corps ou objets situés dans une zone de détection (8) dudit capteur hyperfréquence (2), et
- un moyen réfléchissant (6) configuré pour réfléchir les rayonnements électromagnétiques pouvant être captés par le premier ensemble de capteurs hyperfréquences (2),
- deux moyens émissifs de référence (22, 24),
dans lequel le moyen réfléchissant (6) est monté mobile dans la zone de détection (8) de chaque capteur hyperfréquence (2), de manière à déplacer ladite zone de détection (8) par déplacement du moyen réfléchissant (6), et dans lequel le moyen réfléchissant (6) est configuré pour également déplacer la zone de détection (8) de chaque capteur hyperfréquence (2) successivement sur un corps ou objets et sur chacun des moyens émissifs de référence (22, 24),
et dans lequel le dispositif d'imagerie est configuré pour calibrer le gain et le facteur de bruit de chaque capteur du premier ensemble de capteurs hyperfréquences à partir de la mesure, par chaque capteur du premier ensemble de capteurs hyperfréquences, du rayonnement de chacun des deux moyens émissifs de référence.

2. Dispositif d'imagerie (1) selon la revendication **1**, comprenant également un moyen de focalisation (4), monté dans la zone de détection (8) de chaque capteur hyperfréquence (2) et permettant de focaliser sur chaque capteur hyperfréquence (2) les rayonnements électromagnétiques issus d'une zone de mesure (10), et dans lequel le moyen réfléchissant (6) est positionné entre le moyen de focalisation (4) et la zone de mesure (10) de chaque capteur hyperfréquence (2).

3. Dispositif d'imagerie (1) selon la revendication **1 ou 2**, dans lequel le moyen réfléchissant (6) est monté mobile en rotation autour d'un premier axe, par exemple horizontal, et de préférence autour d'un deuxième axe, par exemple perpendiculaire au premier axe.

4. Dispositif d'imagerie (1) selon l'une quelconque des revendications **1 à 3**, comprenant un moyen de rotation configuré pour faire tourner le moyen réfléchissant autour du premier axe à une vitesse de rotation supérieure ou égale à 300 tours par minute, de préférence supérieure ou égale à 450 tours par minute, et plus préférentiellement supérieure ou égale à 600 tours par minute..

5. Dispositif d'imagerie (1) selon les revendications **3 ou 4**, dans lequel le moyen réfléchissant (6) est monté dans un cylindre (12) transparent aux rayonnements électromagnétiques pouvant être captés par le ou les capteurs hyperfréquences (2).

6. Dispositif d'imagerie (1) selon la revendication **5**, dans lequel le moyen réfléchissant (6) est plan et dans lequel l'axe du cylindre (12) est monté selon le premier axe et s'étend dans le plan du moyen réfléchissant.

7. Dispositif d'imagerie (1) selon la revendication **5 ou 6**, dans lequel le moyen réfléchissant (6) comporte un plan avec deux faces réfléchissantes.

8. Dispositif d'imagerie (1) selon la revendication **7**, comprenant un deuxième ensemble de capteurs hyperfréquences (2), de préférence radiométriques, monté en regard du premier ensemble de capteurs hyperfréquences (2), et dans lequel le moyen réfléchissant (6) est monté entre le premier ensemble de capteurs hyperfréquences (2), et le deuxième ensemble de capteurs hyperfréquences (2), et mobile dans la zone de détection (8) de chaque capteur hyperfréquence (2), de manière à déplacer ladite zone de détection (8) par déplacement du moyen réfléchissant (6).

9. Dispositif d'imagerie selon la revendication précédente, dans lequel les deux moyens émissifs de référence sont formés avec des matériaux absorbants régulés à deux températures différentes.

10. Procédé d'imagerie hyperfréquence, de préférence radiométrique, comprenant :
- un premier ensemble de capteurs hyperfréquences (2), de préférence radiométriques, chaque capteur hyperfréquence (2) étant configuré pour capter des rayonnements électromagnétiques émis ou réfléchis par des corps ou objets situés dans une zone de détection (8) dudit capteur hyperfréquence (2), et
- un moyen réfléchissant (6) configuré pour réfléchir les rayonnements électromagnétiques pouvant être captés par le premier ensemble de capteurs hyperfréquences (2), et monté mobile dans la zone de détection de chaque capteur hyperfréquence (2),
dans lequel on déplace le moyen réfléchissant (6) de manière à déplacer ladite zone de détection (8) sans déplacer le premier capteur ou ensemble de capteurs hyperfréquences (2), et dans lequel on déplace la zone de détection (8) de chaque capteur hyperfréquence (2) successivement sur un corps ou objets et sur deux moyens émissifs de référence (22, 24) afin de calibrer le gain et le facteur de bruit de chaque capteur hyperfréquence du premier ensemble de capteurs hyperfréquences, à partir de la mesure, par chaque capteur du premier ensemble de capteurs hyperfréquences, du rayonnement de chacun des deux moyens émissifs de référence.

11. Procédé selon la revendication **10** dans lequel le moyen réfléchissant (6) est un plan réfléchissant monté dans un cylindre (12) transparent aux rayonnements électromagnétiques pouvant être captés par le ou les capteurs hyperfréquences (2), dans lequel l'axe du cylindre (12) est monté dans le plan du moyen réfléchissant (6), et dans lequel on fait tourner le cylindre (12) transparent autour de son axe pour déplacer ladite zone de détection (8).

## Patentansprüche

1. Abbildungsvorrichtung (1), **dadurch gekennzeichnet, dass** sie aufweist:
- einen ersten Satz Mikrowellensensoren (2), die vorzugsweise radiometrisch sind, wobei jeder Mikrowellensensor (2) konfiguriert ist, um elektromagnetische Strahlung zu empfangen, die von Körpern oder Objekten emittiert oder reflektiert wird, die sich in einem Erfassungsbereich (8) des Mikrowellensensors (2) befinden, und
- ein Reflexionsmittel (6), das konfiguriert ist, um die elektromagnetische Strahlung zu reflektieren, die von dem ersten Satz von Mikrowellensensoren (2) empfangen werden kann,
- zwei Referenzemissionsmittel (22, 24),
wobei das Reflexionsmittel (6) in dem Erfassungsbereich (8) jedes Mikrowellensensors (2) derart beweglich angebracht ist, um den Erfassungsbereich (8) durch Bewegen des Reflexionsmittels (6) zu bewegen, und wobei das Reflexionsmittel (6) konfiguriert ist, um auch den Erfassungsbereich (8) jedes Mikrowellensensors (2) nacheinander auf einem Körper oder auf Objekten und auf jedem der Referenzemissionsmittel (22, 24) zu bewegen,
und wobei die Abbildungsvorrichtung konfiguriert ist, um die Verstärkung und den Rauschfaktor jedes Sensors des ersten Satzes von Mikrowellensensoren ausgehend von der Messung der Strahlung von jedem der zwei Referenzemissionsmittel durch jeden Sensor des ersten Satzes von Mikrowellensensoren zu kalibrieren.

2. Abbildungsvorrichtung (1) nach Anspruch 1, die ferner ein Fokussiermittel (4) aufweist, das in dem Erfassungsbereich (8) jedes Mikrowellensensors (2) angebracht ist und ermöglicht, die elektromagnetische Strahlung, die von einem Messbereich (10) stammt, auf jeden Mikrowellensensor (2) zu fokussieren, und wobei das Reflexionsmittel (6) zwischen dem Fokussiermittel (4) und dem Messbereich (10) jedes Mikrowellensensors (2) angeordnet ist.

3. Abbildungsvorrichtung (1) nach Anspruch 1 oder 2, wobei das Reflexionsmittel (6) drehbeweglich um eine erste Achse, die beispielsweise horizontal ist, und vorzugsweise um eine zweite Achse, die beispielsweise senkrecht zur ersten Achse ist, angebracht ist.

4. Abbildungsvorrichtung (1) nach einem der Ansprüche 1 bis 3, umfassend ein Drehmittel, das konfiguriert ist, um das Reflexionsmittel mit einer Drehgeschwindigkeit, die gleich oder größer als 300 Umdrehungen pro Minute, vorzugsweise gleich oder größer als 450 Umdrehungen pro Minute und insbesondere gleich oder größer als 600 Umdrehungen pro Minute ist, um die erste Achse zu drehen.

5. Abbildungsvorrichtung (1) nach Anspruch 3 oder 4, wobei das Reflexionsmittel (6) in einem Zylinder (12) angeordnet ist, der für die elektromagnetische Strahlung durchlässig ist, die durch den oder die Mikrowellensensoren (2) erfasst werden kann.

6. Abbildungsvorrichtung (1) nach Anspruch 5, wobei das Reflexionsmittel (6) eben ist und wobei die Achse des Zylinders (12) entlang der ersten Achse angeordnet ist und sich in der Ebene des Reflexionsmittels erstreckt.

7. Abbildungsvorrichtung (1) nach Anspruch 5 oder 6, wobei das Reflexionsmittel (6) eine Ebene mit zwei reflektierenden Flächen aufweist.

8. Abbildungsvorrichtung (1) nach Anspruch 7, umfassend einen zweiten Satz Mikrowellensensoren (2), die vorzugsweise radiometrisch sind, die gegenüber von dem ersten Satz Mikrowellensensoren (2) angebracht sind, und wobei das Reflexionsmittel (6) zwischen dem ersten Satz Mikrowellensensoren (2) und dem zweiten Satz Mikrowellensensoren (2) und beweglich in dem Erfassungsbereich (8) von jedem Mikrowellensensor (2) derart angebracht ist, um den Erfassungsbereich (8) durch Bewegen des Reflexionsmittels (6) zu bewegen.

9. Abbildungsvorrichtung nach dem vorhergehenden Anspruch, wobei die zwei Referenzemissionsmittel aus absorbierenden Materialien gebildet sind, die auf zwei verschiedene Temperaturen geregelt sind.

10. Mikrowellenabbildungsverfahren, das vorzugsweise radiometrisch ist, umfassend:
- einen ersten Satz Mikrowellensensoren (2), die vorzugsweise radiometrisch sind, wobei jeder Mikrowellensensor (2) konfiguriert ist, um elektromagnetische Strahlung zu empfangen, die von Körpern oder Objekten emittiert oder reflektiert wird, die sich in einem Erfassungsbereich (8) des Mikrowellensensors (2) befinden, und
- ein Reflexionsmittel (6), das konfiguriert ist, um die elektromagnetische Strahlung zu reflektieren, die von dem ersten Satz von Mikrowellensensoren (2) empfangen werden kann, und in dem Erfassungsbereich jedes Mikrowellensensors (2) beweglich angebracht ist,
wobei das Reflexionsmittel (6) derart bewegt wird, um den Erfassungsbereich (8) zu bewegen, ohne den ersten Mikrowellensensor oder den Satz Mikrowellensensoren (2) zu bewegen, und wobei der Erfassungsbereich (8) jedes Mikrowellensensors (2) nacheinander auf einem Körper oder auf Objekten und auf zwei Referenzemissionsmitteln (22, 24) bewegt wird, um die Verstärkung und den Rauschfaktor jedes Mikrowellensensors des ersten Satzes von Mikrowellensensoren ausgehend von der Messung der Strahlung von jedem der zwei Referenzemissionsmittel durch jeden Sensor des ersten Satzes von Mikrowellensensoren zu kalibrieren.

11. Verfahren nach Anspruch 10, wobei das Reflexionsmittel (6) eine Reflexionsebene ist, die in einem Zylinder (12) angeordnet wird, der für die elektromagnetische Strahlung durchlässig ist, die durch den oder die Mikrowellensensoren (2) erfasst werden kann, und wobei die Achse des Zylinders (12) in der Ebene des Reflexionsmittels (6) angeordnet wird, und wobei der durchlässige Zylinder (12) um seine Achse gedreht wird, um den Erfassungsbereich (8) zu bewegen.

## Claims

1. An imaging device (1), **characterized in that** it comprises:
- a first set of microwave sensors (2), preferably radiometric sensors, each microwave sensor (2) being configured to pick up electromagnetic radiation emitted or reflected by bodies or objects situated in a detection zone (8) of said microwave sensor (2); and
- reflector means (6) configured to reflect the electromagnetic radiation that can be picked up by the first set of microwave sensors (2);
- two reference emitter means (22, 24),
wherein the reflector means (6) are mounted to be movable in the detection zone (8) of each microwave sensor (2) so as to move said detection zone (8) by movement of the reflector means (6), and wherein the reflector means (6) are configured also to move the detection zone (8) of each microwave sensor (2) successively over a body or object and over each of the two reference emitter means (22, 24)
and wherein the imaging device is configured to calibrate the gain and noise factor of each microwave sensor of the first set of microwave sensors (2) from the measurement, by each microwave sensor of the first set of microwave sensors, of the radiation of each of the two reference emitter means.

2. An imaging device (1) according to claim 1, also including focusing means (4) mounted in the detection zone (8) of each microwave sensor (2) and enabling the electromagnetic radiation from a measurement zone (10) to be focused on each microwave sensor (2), and wherein the reflector means (6) are positioned between the focusing means (4) and the measurement zone (10) of each microwave sensor (2).

3. An imaging device (1) according to claim 1 or claim 2, wherein the reflector means (6) are mounted to move in rotation about a first axis, e.g. a horizontal axis, and preferably about a second axis, e.g. an axis perpendicular to the first axis.

4. An imaging device (1) according to any one of claims 1 to 3, including rotary means configured to rotate the reflector means about a first axis at a speed of rotation greater than or equal to 300 rpm, preferably greater than or equal to 450 rpm, and more preferably greater than or equal to 600 rpm.

5. An imaging device (1) according to claim 3 or claim 4, wherein the reflector means (6) are mounted in a cylinder (12) that is transparent to the electromagnetic radiation that can be picked up by the microwave sensor(s) (2).

6. An imaging device (1) according to claim 5, wherein the reflector means (6) are plane and wherein the axis of the cylinder (12) is mounted on the first axis and extends in the plane of the reflector means.

7. An imaging device (1) according to claim 5 or claim 6, wherein the reflector means (6) comprise a plane having two reflecting faces.

8. An imaging device (1) according to claim 7, including a second set of microwave sensors (2), preferably radiometric sensors, mounted facing the first set of microwave sensors (2), and wherein the reflector means (6) are mounted between the first set of microwave sensors (2) and the second set of microwave sensors (2), and are movable in the detection zone (8) of each microwave sensor (2) so as to move said detection zone (8) by movement of the reflector means (6).

9. An imaging device (1) according to the preceding claim, wherein the two reference emitter means are made of absorbent materials that are temperature regulated at two different temperatures.

10. A microwave imaging method, and preferably a radiometric imaging method, comprising:
- a first set of microwave sensors (2), preferably radiometric sensors, each microwave sensor (2) being configured to pick up electromagnetic radiation emitted or reflected by bodies or objects situated in a detection zone (8) of said microwave sensor (2); and
- reflector means (6) configured to reflect the microwave radiation that can be picked up by the first set of microwave sensors (2) and mounted to move in the detection zone of each microwave sensor (2);
wherein the reflector means (6) are moved in such a manner as to move said detection zone (8) without moving the first microwave sensor or set of microwave sensors (2), and wherein the detection zone (8) of each microwave sensor (2) is moved successively over a body or objects and over two reference emitter means (22, 24) in order to calibrate the gain and noise factor of each microwave sensor of the first set of microwave sensors, from the measurement, by each microwave sensor of the first set of microwave sensors, of the radiation of each of the reference emitter means.

11. A method according to claim 10, wherein the reflector means (6) comprise a reflecting plane mounted in a cylinder (12) that is transparent to the electromagnetic radiation that can be picked up by the microwave sensor(s) (2), wherein the axis of the cylinder (12) is mounted in the plane of the reflector means (6), and wherein the transparent cylinder (12) is caused to rotate about its axis in order to move said detection zone (8).
